# FASCICULE DE BREVET EUROPEEN

(11) **EP 3 584 146 B1**
(45) Date de publication et mention de la délivrance du brevet: **05.05.2021**
(21) Numéro de dépôt: 19175483.7
(22) Date de dépôt: 20.05.2019
(51) Int. Cl.: B62H 5/06

(54) **CYCLE POURVU D'UN SYSTÈME ANTIVOL BLOCAGE DE FOURCHE ET SYSTÈME AUTOMATIQUE DE MISE À DISPOSITION D'UN TEL CYCLE**
FAHRRAD, DAS MIT EINEM DIEBSTAHLSCHUTZSYSTEM MIT BLOCKIERUNG DER RADGABEL AUSGESTATTET IST, UND AUTOMATISCHES SYSTEM ZUR BEREITSTELLUNG EINES SOLCHEN FAHRRADS
CYCLE PROVIDED WITH AN ANTI-THEFT FORK LOCKING SYSTEM AND AUTOMATIC SYSTEM FOR PROVIDING SUCH A CYCLE

(30) Priorité: 19.06.2018 FR 1855355
(43) Date de publication de la demande: 25.12.2019
(73) Titulaire: JCDecaux SA, 92200 Neuilly-Sur-Seine (FR)
(72) Inventeur: FORESTIER, Jean-Marc, 78180 MONTIGNY LE BRETONNEUX (FR); METAIS, Pascal, 78770 THOIRY (FR)
(74) Mandataire: Plasseraud IP

(56) Documents cités:
- CN-A- 103 481 971
- CN-A- 104 527 849
- CN-A- 106 005 115
- DE-A1- 4 329 444
- FR-A1- 2 824 942
- FR-A1- 2 873 475

## Description

### DOMAINE TECHNIQUE

La présente est relative aux cycles pourvus de verrous antivol par le blocage de la fourche du vélo et de systèmes automatiques de mise à disposition de tels cycles.

### ARRIERE PLAN

Les documents WO96/26102, EP0808268, GB2274438, US2231546, US4051703, US4055060, US6237376 et US8240692 décrivent des systèmes antivols comprenant verrou antivol bloquant le guidon (et donc la fourche). Le verrou est actionné par une clé que l'utilisateur garde lorsqu'il a verrouillé le vélo. Un des inconvénients des systèmes à clé est que cette clé pourrait être perdue par l'utilisateur. De plus, l'utilisation de la clé pourrait ne pas facilement être compatible avec un système de mise à disposition de cycles, pour lequel divers utilisateurs utilisent le même cycle en partage.

D'autres systèmes, comme celui décrit dans CN104527849, montrent l'utilisation d'un verrou à code manuel. Le document CN 104 527 849 divulgue un cycle conformément au préambule de la revendication 1. Ce système suppose que l'utilisateur retienne le code. De plus, l'utilisation d'un tel système n'est pas favorable lorsque le cycle fait partie d'un système de mise à disposition de cycles dans lequel divers utilisateurs utilisent le même cycle en partage.

D'autre part, la plupart de ces systèmes nécessitent d'effectuer un trou dans le cadre et le guidon pour recevoir le verrou antivol.

### OBJETS

Les cycles décrits dans les documents susmentionnés donnent toute satisfaction, mais ne donnent pas néanmoins la possibilité à divers utilisateurs de verrouiller/déverrouiller le même cycle de façon personnalisée et simplifiée.

L'invention a notamment pour but de pallier cet inconvénient.

A cet effet, l'invention propose un cycle comportant un cadre porté par une roue arrière, une fourche montée pivotante sur le cadre et solidaire d'un guidon, une roue avant portant la fourche, et un verrou antivol comprenant :
- un organe de blocage de fourche fixé à la fourche du cycle, l'organe de blocage de fourche comprenant une ouverture; et
- un système antivol monté au cadre du cycle et coopérant avec l' organe de blocage de fourche, le système antivol ayant un organe de verrouillage mobile entre une première position où l'organe de verrouillage est distant de l'ouverture de l'organe de blocage de fourche et le verrou antivol est en position déverrouillé, et une deuxième position où l'organe de verrouillage coopère avec l'ouverture de l'organe de blocage de fourche et le verrou antivol est en position verrouillé,
   le verrou antivol étant en position verrouillé lorsque l'ouverture de l'organe de blocage de fourche est disposée pour être en correspondance avec l'organe de verrouillage coopérant avec l'ouverture de l'organe de blocage de fourche, la correspondance étant assurée lorsque la fourche est dans une position tournée où la roue avant forme un angle non nul vis à vis d'une direction longitudinale du cadre, lorsque le verrou antivol est en position verrouillé la fourche est bloquée dans la position tournée de la roue avant.
   Et le cycle comporte aussi les dispositions suivantes :
   - l'organe de verrouillage est une tige ayant une forme et une taille en section de coupe adaptée à être insérée dans l'ouverture de l'organe de fourche pour verrouiller le verrou antivol.
   - l'organe de verrouillage est sollicité élastiquement vers la première position, le système antivol inclut un système de blocage de l'organe de verrouillage dans la deuxième position, et le système antivol comporte un actionneur agissant sur le système de blocage de l'organe de verrouillage pour débloquer l'organe de verrouillage de la deuxième position.
   - Le cycle comprenant de plus un moyen de communication connecté à l'actionneur, le moyen de communication permettant de commander l'actionneur à distance.
- la tige a une butée, et le système de blocage de l'organe de verrouillage inclut :
   - un soufflet commandé par l'actionneur,
   - une came pivotant élastiquement, la came ayant une première extrémité abutant sur la tige et une deuxième extrémité connectée au soufflet, lorsque l'organe de verrouillage est dans la deuxième position la première extrémité de la came est engagée dans la butée de sorte à bloquer l'organe de verrouillage dans la deuxième position

Dans des modes de réalisation particuliers, le cycle peut comporter en outre une ou plusieurs des dispositions suivantes :
- l'actionneur est électrique.
- le système antivol comprend un bouton connecté à l'organe de verrouillage par un ressort précontraint vers la première position de l'organe de verrouillage, une pression du bouton forçant l'organe de verrouillage vers la deuxième position contre l'action du ressort précontraint.
- le système de blocage de l'organe de verrouillage est au moins partiellement intégré à l'intérieur du cadre.
- l'organe de verrouillage est disposé partiellement à l'intérieur du cadre et partiellement à l'extérieur du cadre en direction de la fourche.

Par ailleurs, l'invention a également pour objet un système automatique de mise à disposition de cycles comprenant :
- une pluralité de cycles tels que définis ci-dessus;
- une infrastructure adaptée pour mettre à disposition les cycles à des utilisateurs, l'infrastructure étant adaptée pour, lorsqu'elle délivre un cycle à un utilisateur, communiquer un code secret propre à l'utilisateur au verrou antivol du cycle.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un exemple de système automatique de stockage et mise à disposition de cycles pouvant mettre en œuvre l'invention,
- la figure 2 est une vue de détail en perspective d'un exemple de poste de verrouillage du système de la figure 1,
- la figure 3 est une vue en perspective d'un cycle du système de la figure 1,
- la figure 4 est un schéma bloc des constituants électriques du système de stockage et mise à disposition de cycles,
- la figure 5 est une vue en perspective d'une portion avant d'un cycle du système de la figure 1,
- la figure 6 est une vue en perspective d'une portion avant du cycle montrant un système antivol comprenant un organe de blocage de fourche et un verrou antivol selon un mode de réalisation, avec un organe de verrouillage montré dans une deuxième position, et
- la figure 7 est une vue en perspective montrant les différents composants d'un verrou antivol selon un mode de réalisation, avec l'organe de verrouillage montré dans la deuxième position.

### DESCRIPTION PLUS DETAILLEE

Sur les différentes figures, les mêmes références désignent des éléments identiques ou similaires.

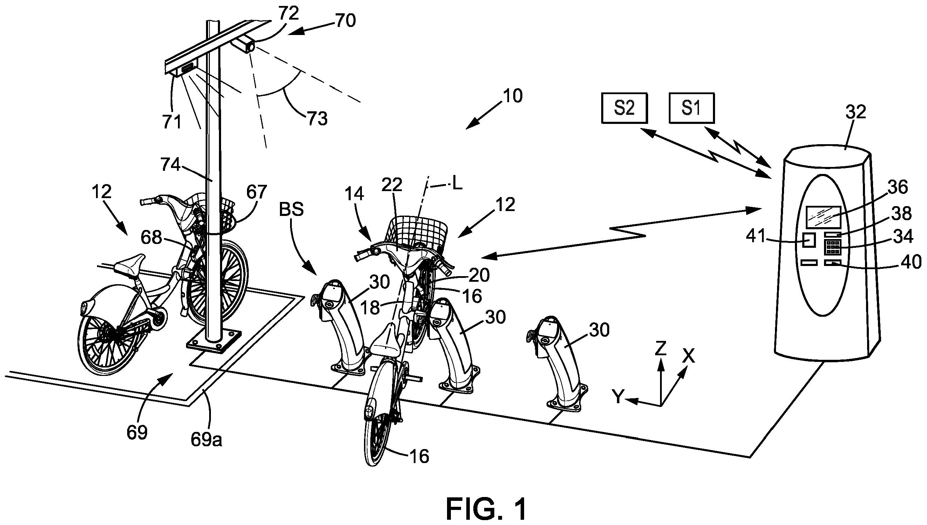

La figure 1 montre un système automatique 10 de stockage et mise à disposition de cycles 12 tels que notamment des bicyclettes, permettant par exemple de stocker des cycles 12 sur la voie publique de façon à les mettre à disposition du public.

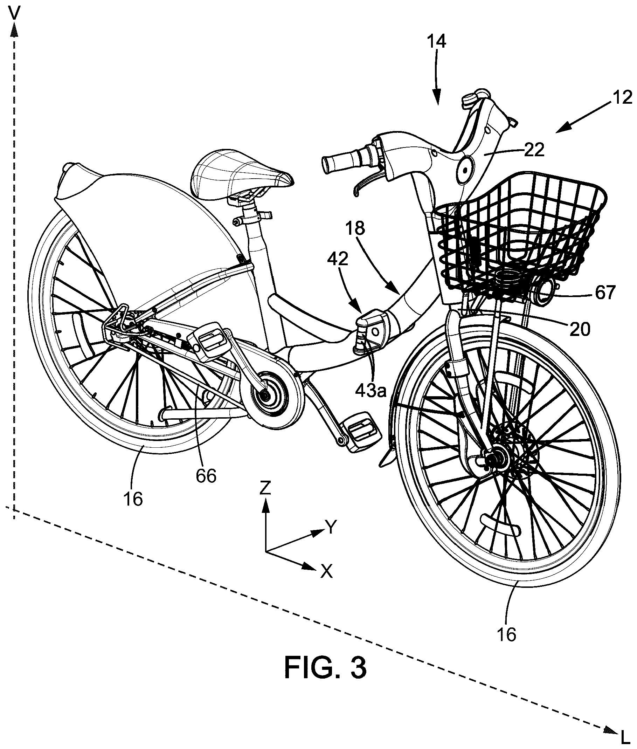

Comme représenté sur les figures 1 et 3, chaque cycle 12 peut comporter une structure 14 montée sur deux roues 16, la structure 14 incluant un cadre 18 et une fourche 20 portant un guidon 22 et montée pivotante sur un tube de direction 23 solidaire du cadre 18. Le cadre 18 s'étend dans une direction longitudinale L du cycle 12.

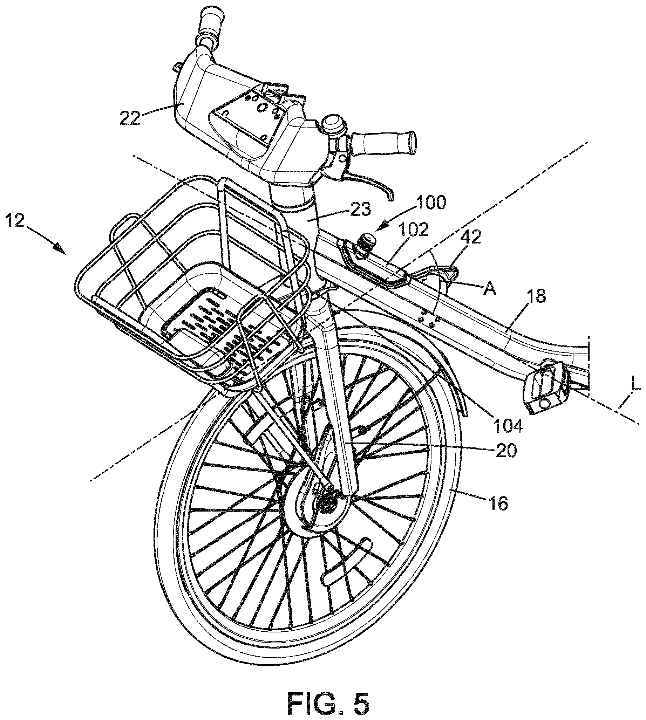

Chaque cycle 12 comporte un verrou antivol blocage de fourche 100 (visible aux figures 5 à 7), qui bloque la roue avant 16 dans une position à un angle non nul avec la direction longitudinale L. Le verrou antivol 100 sera décrit plus en détail ci-dessous. Chaque cycle 12 peut, optionnellement, en outre comporter un lien antivol flexible 67.

Toujours en référence à la figure 1, ce système automatique 10 de stockage de cycles peut comporter plusieurs stations BS de stockage de cycles, dont une est représentée sur la figure 1, comportant des postes de verrouillage 30. A chaque station de stockage de cycles BS peut correspondre un poste de commande de station 32, qui peut par exemple se présenter sous la forme d'une borne interactive dotée d'une interface utilisateur comprenant par exemple un clavier 34, un écran 36 tactile ou autre, un lecteur de cartes portatives électroniques 38, un dispositif 40 d'impression de tickets, un lecteur de carte sans contact 41, etc.

La borne interactive 32 communique d'une part, avec un serveur central S1 qui gère les abonnements et les locations de cycles, et d'autre part, le cas échéant avec un serveur S2 qui peut gérer des services aux utilisateurs accessibles sur la borne interactive 32. La communication avec les serveurs S1, S2 peut se faire notamment par voie radio.

La borne interactive 32 peut également communiquer le cas échéant, notamment par voie radio et en particulier par une liaison radio courte portée (par exemple au protocole Zigbee® ou autre), avec les cycles 12 verrouillés à la station BS ou situés à proximité.

De plus, la borne interactive 32 peut éventuellement communiquer, par exemple par voie filaire ou radio courte portée, avec un dispositif de sécurisation 70. Le dispositif de sécurisation 70 peut comporter par exemple un dispositif d'éclairage 71 adapté pour éclairer la station BS et / ou une caméra 72 dont le champ de vision 73 couvre la station BS. Le dispositif d'éclairage 71 et / ou la caméra 72 peuvent être montés en hauteur, par exemple sur un poteau 74, un bâtiment, un élément de mobilier urbain, ou autre. Eventuellement, le dispositif de sécurisation 70 pourrait être intégré à la borne interactive 32. En variante, le dispositif de sécurisation 70 pourrait être commandé depuis le serveur S1 ou un autre dispositif de commande distant appartenant au système.

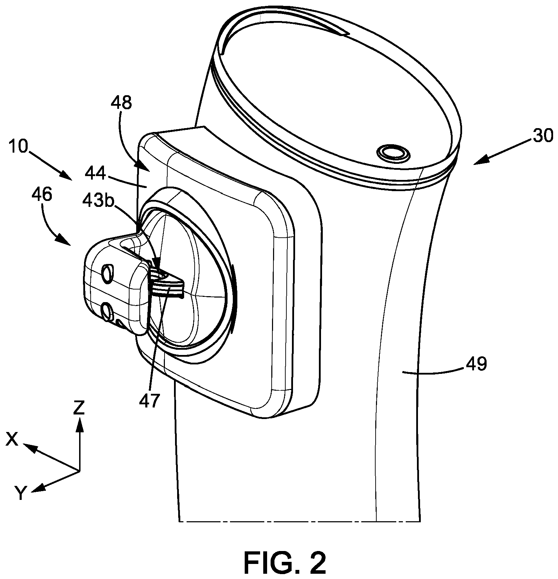

Enfin, la borne interactive 32 communique, par exemple par voie filaire ou radio courte portée, avec les postes de verrouillage 30 de la station BS, sur lesquels peuvent se verrouiller des cycles 12. Les postes de verrouillage 30 peuvent se présenter notamment sous forme de bornes fixées au sol. Chaque cycle 12 comporte un premier organe d'accrochage 42 (visible à la figure 3 et qui sera décrit ci-après) qui est adapté pour se verrouiller sur un deuxième organe d'accrochage 44 (montré à la figure 2) appartenant à n'importe quel poste de verrouillage 30 du système 10, sur n'importe quelle station BS du système.

La station BS peut également comporter une zone de dépose de cycles 69, délimitée par exemple par un marquage au sol 69a, qui est utilisable pour rendre un cycle 12 lorsque tous les postes de verrouillage 30 de la station sont occupés.

Comme on peut le voir sur la figure 2, le deuxième organe d'accrochage 44 de chaque poste de verrouillage 30 peut éventuellement se présenter sous forme d'une gâche 46 rigide, montée par exemple articulée sur un support 48 solidaire d'une structure 49 du poste de verrouillage 30.

Cette gâche 46 peut être par exemple en forme de C ouvert verticalement vers le haut et vers le bas ainsi qu'horizontalement dans une direction d'engagement du premier organe d'accrochage 42 appartenant au cycle 12.

La gâche 46 peut être articulée sur le support 48, par exemple par une rotule.

La gâche 46 comporte un organe de verrouillage 47, qui est actionné par un actionneur électrique (non représenté) contenu dans le support 48 et de type connu en soi. L'organe de verrouillage 47 peut être sollicité élastiquement vers la position de verrouillage où il est à même de bloquer le premier organe d'accrochage du cycle dans la gâche 46 pour verrouiller le cycle 12 sur le poste de verrouillage 30, et il peut être actionné par ledit actionneur électrique vers une position escamotée où il libère le premier organe d'accrochage 42 et donc le cycle 12.

Comme représenté sur la figure 3, le premier organe d'accrochage 42 du cycle 12 est monté sur la structure 14 du cycle 12, notamment sur le cadre 18.

Le premier organe d'accrochage 42 peut être sensiblement en forme d'anneau rigide, comportant un barreau rigide orienté selon un axe sensiblement vertical dans la position normale d'utilisation du cycle 12.

Le barreau peut éventuellement être réalisé en matériau électriquement isolant et comporter deux contacts électriques 43a superposés adaptés pour venir en contact électrique avec des contacts électriques 43b de la gâche 46 lorsque le premier organe d'accrochage 42 est verrouillé sur la gâche 46, de façon à faire communiquer l'électronique du poste de verrouillage 30 avec l'électronique embarquée du cycle 12, et le cas échéant de façon à charger une batterie du cycle 12, notamment s'il s'agit d'un cycle à assistance électrique.

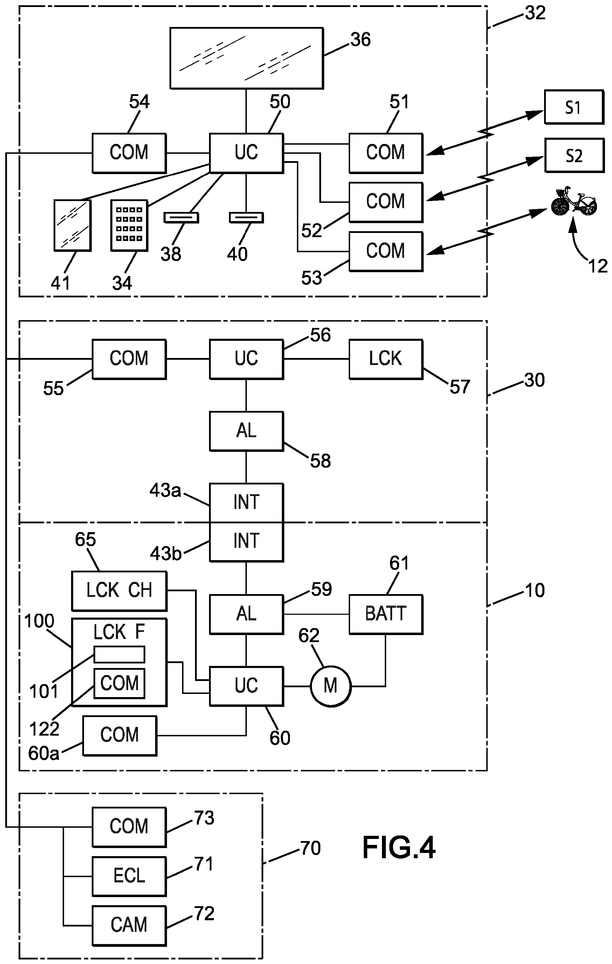

Comme représenté sur la figure 4, la borne interactive 32 peut comporter au moins une unité centrale électronique 50 (UC) telle qu'un micro-ordinateur ou similaire, reliée à :
- des interfaces de communication radio 51, 52, 53 (COM) respectivement avec les serveurs S1, S2 et avec les cycles 12 situés dans la station ou à proximité immédiate, l'interface de communication 53 pouvant être une interface radio fonctionnant par exemple sous le protocole Zigbee®, comme indiqué précédemment,
- une interface de communication 54 (COM) pour la communication avec les postes de verrouillage 30 de la station BS,
- les interfaces utilisateur 34, 36, 38, 40, 41 susmentionnées et éventuellement d'autres.

Chaque poste de verrouillage 30 peut comporter une unité centrale électronique 56 (UC) telle qu'un microcontrôleur ou autre, reliée :
- à un actionneur de déverrouillage 57 (LCK) qui commande l'organe de verrouillage 47 susmentionné,
- à une interface de communication 55 (COM) communiquant avec l'interface 54 susmentionnée,
- à un dispositif d'alimentation électrique 58 (AL) relié au réseau électrique ou à une autre source d'énergie électrique, et lui-même relié aux contacts électrique 43a (INT) susmentionnés.

Chaque cycle 1 peut comporter également une unité centrale électronique 60 (UC) telle qu'un microcontrôleur ou autre, reliée :
- à la batterie 61 (BATT) et au moteur électrique 62 (M) du cycle si le cycle est à assistance électrique (ces éléments sont facultatifs ; l'invention s'applique aussi bien aux cycles avec ou sans assistance électrique),
- à un dispositif d'alimentation électrique 59 (AL) relié aux contacts susmentionnés 43a (INT), eux-mêmes reliés aux contacts électrique 43b(INT) susmentionnés du poste de verrouillage 30 lorsque le cycle est verrouillé sur un poste de verrouillage,
- à un dispositif électrique de verrouillage 65 (LCK CH) de la chaîne 66 du vélo (si le vélo en comporte un),
- au verrou antivol 100 ;
- une interface de communication radio 60a (COM), fonctionnant par exemple sous le protocole Zigbee® et adaptée pour communiquer avec l'interface de communication 53 susmentionnée de la borne interactive 32.

Le verrou antivol blocage de fourche 100 peut éventuellement inclure aussi une unité centrale électronique 101 qui communique avec l'unité centrale électronique 60 du cycle, et un module de communication 122 pour recevoir une identification de l'utilisateur.

Le dispositif de sécurisation 70 peut comporter une interface de communication 73 (COM) permettant à l'unité centrale 50 de la borne interactive de communiquer avec le dispositif d'éclairage 71 (ECL), la caméra 72 (CAM) ou tout autre dispositif de sécurité. Ce dispositif de sécurisation peut être omis sans sortir du cadre de la présente invention.

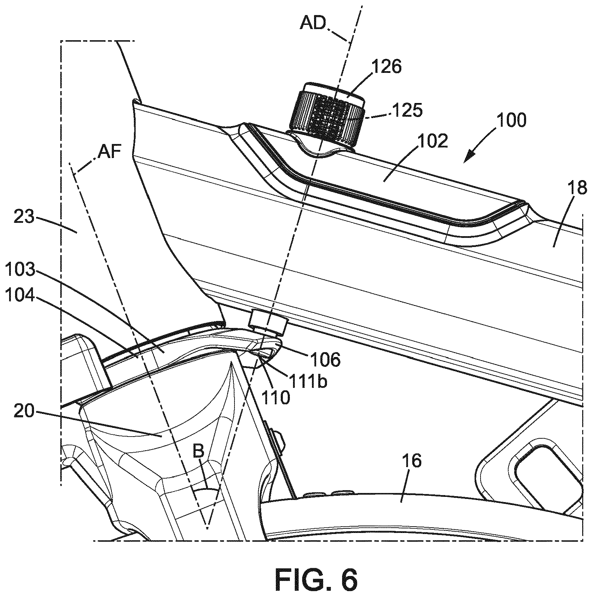

En référence maintenant aux figures 5 et 6, le verrou antivol 100 inclut un organe de blocage de fourche 104 fixé à la fourche 20 et un système antivol 102 fixé au cadre 18. Le système antivol 102 coopère sélectivement avec l'organe de blocage de fourche 104 de sorte à bloquer la roue 16 avant dans une position tournée, non-parallèle avec la direction longitudinale L du cycle 12.

À cet effet, l'organe de blocage de fourche 104 inclut une ouverture 106 dimensionnée pour recevoir sélectivement un organe de verrouillage 110 du système antivol 102. L'organe de blocage de la fourche 104 peut prendre la forme d'une couronne 103. La couronne 103 est disposée, dans ce mode de réalisation, sous le système antivol 102, en dessous du tube de direction 23, de sorte qu'en faisant pivoter le guidon 22, l'ouverture 106 de l'organe de blocage de la fourche 104 peut être positionnée en alignement avec un axe de déplacement AD de l'organe de verrouillage 110. Dans le mode de réalisation illustré dans les figures, l'axe de déplacement AD de l'organe de verrouillage 110 est à un angle non-nul B avec un axe de la fourche AF, de sorte à être orienté en direction de la fourche 20. Pour faciliter cet alignement, selon un mode de réalisation, la position d'alignement de l'ouverture 106 avec l'organe de verrouillage 110 peut correspondre à une position de butée de fin de course du guidon 22. L'ouverture 106 pourrait être une butée bidirectionnelle ou bien, comme illustrée dans les figures, un trou défini dans la couronne 103.

Selon un mode de réalisation, l'organe de verrouillage 110 est une tige 111 ayant une forme et une taille en section de coupe adaptée à être insérée dans l'ouverture 106 de l'organe de blocage de fourche 104.

L'organe de verrouillage 110 se déplace entre une première position où l'organe de verrouillage 110 est distant de l'ouverture 106 de l'organe de blocage de fourche 104, et une deuxième position où l'organe de verrouillage 110 coopère avec l'ouverture 106 de l'organe de blocage de fourche 104 (montré à la figure 6). Dans la première position, le verrou antivol 100 est déverrouillé. Dans la deuxième position, le verrou antivol 100 est verrouillé.

Ainsi, le verrou antivol 100 est verrouillé lorsque l'organe de verrouillage 110 coopère avec l'organe blocage de fourche 104, qui dans le mode de réalisation des figures correspond à l'ouverture 106 de l'organe de blocage de fourche 104 disposée pour être en correspondance avec l'organe de verrouillage 110 inséré dans l'ouverture 106 de l'organe de blocage de fourche 104. La correspondance est assurée lorsque la fourche 20 est dans une position tournée où la roue avant 16 formant un angle A (montré à la figure 5) non nul vis à vis d'une direction longitudinale L du cadre 18. Lorsque le verrou antivol 100 est verrouillé la fourche 20 est bloquée dans la position tournée de la roue avant 16.

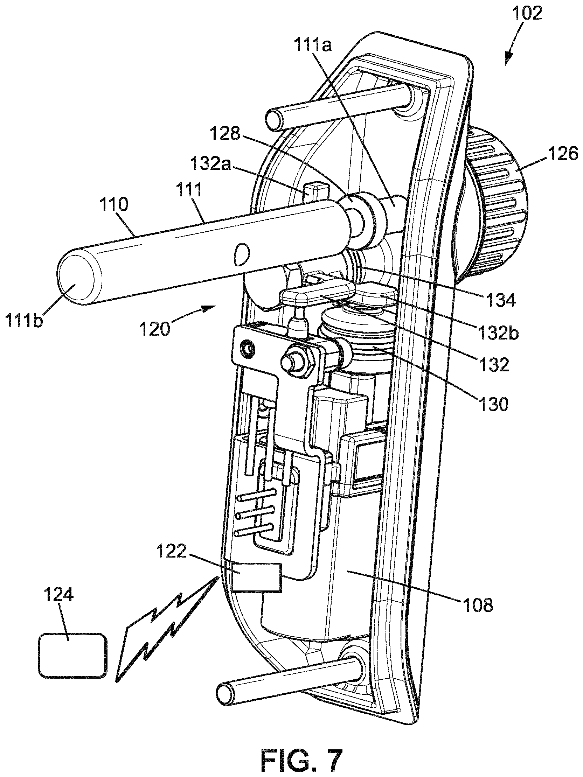

En se référant maintenant à la figure 7, selon un mode de réalisation tel qu'illustré dans les figures, le système antivol 102 inclut un système 120 de blocage de l'organe de verrouillage pour bloquer l'organe de verrouillage 110 dans la deuxième position, c'est-à-dire dans la position pour verrouiller le verrou antivol 100.

Le système 120 de blocage de l'organe de verrouillage 110 est intégré à l'intérieur du cadre 18. La tige 111 de l'organe de verrouillage 110 a une première extrémité 111a connectée au système 120 et disposée partiellement à l'intérieur du cadre 18, et une deuxième extrémité 111b à l'extérieur du cadre 18, afin de coopérer avec l'ouverture 106 de l'organe de blocage de fourche 104. Dans le mode de réalisation des figures, le système 120 de blocage de l'organe de verrouillage 110 est purement mécanique. Cependant, il se pourrait que système 120 ait au moins partiellement un fonctionnement non mécanique.

Le système antivol 102 comporte un actionneur 108 agissant sur le système 120 de blocage de l'organe de verrouillage afin de débloquer l'organe de verrouillage 110 de la deuxième position. L'actionneur 108 est, selon un mode de réalisation, un moteur électrique qui peut être commandé par l'unité centrale 60 du cycle (ou par l'unité centrale 101 du verrou antivol 100) lorsque l'utilisateur communique avec le verrou antivol 100.

L'utilisateur peut communiquer avec le verrou antivol 100 de diverses manières. Selon un mode de réalisation, le système antivol 100 inclut un module de communication 122 (COM) permettant de recevoir une instruction de déverrouillage à distance, par exemple un code de déverrouillage, par la lecture d'une identification radiofréquence RFID (Radio-frequency identification - RFID). Le module de communication 122 pourrait ainsi recevoir une identification de l'utilisateur stocké sur une carte sans contact 124 ayant une puce RFID, ou bien communiquer avec un téléphone portable de l'utilisateur. Il est ainsi possible pour l'utilisateur (et seulement lui) de déverrouiller le verrou antivol 100 en approchant sa carte 124 ou son téléphone ou tout autre moyen d'identification personnelle, du verrou antivol 100. Le module de communication 122 pourrait aussi être l'interface de communication radio 60a du cycle 12 décrite précédemment.

Grace à l'identification personnelle pour le déverrouillage, un utilisateur du système de mise à disposition de cycles 10 ne pourra donc pas déverrouiller le verrou antivol 100 d'un cycle 12 utilisé par un autre utilisateur puisque le déverrouillage est lié à l'identification de l'utilisateur du cycle 12. Un mode d'attribution de l'identification de l'utilisateur avec le cycle 12 utilisé sera décrit plus bas. L'utilisateur peut avoir un code secret unique qui lui est associé, ou bien recevoir un code de déverrouillage (par exemple par l'intermédiaire du poste de commande 32) à chaque utilisation d'un nouveau cycle 12.

Selon un mode de réalisation et tel qu'illustré dans les figures, le verrouillage du verrou antivol 100 est opéré manuellement et le déverrouillage du verrou antivol 100 est opéré électriquement. Ainsi, selon un mode de réalisation, l'organe de verrouillage 110 est sollicité élastiquement vers la première position de sorte que le passage de la première position vers la deuxième position se fait par le déplacement manuel de l'organe de verrouillage 110 de la première position à la deuxième position, contre l'effort élastique le gardant dans la première position. Pour déverrouiller le verrou antivol 100, l'actionneur 108 agit sur le système 120 de blocage de l'organe de verrouillage pour débloquer l'organe de verrouillage 110 de la deuxième position.

Selon le mode de réalisation illustré par les figures, la tige 111 formant l'organe de verrouillage 110 comporte une butée 128 dimensionnée pour recevoir une première extrémité 132a d'une came 132 pivotant élastiquement par l'intermédiaire un ressort précontraint 134 de sorte à être engagé sélectivement avec la butée 128. Le système 120 de blocage de l'organe de verrouillage inclut un soufflet 130 commandé par l'actionneur 108 (qui est électrique selon un mode de réalisation). La came 132 a la première extrémité 132a abutant sur la tige 111, et une deuxième extrémité 132b connectée au soufflet 130. Lorsque l'organe de verrouillage 110 est dans la deuxième position, la première extrémité 132a de la came 132 est engagée dans la butée 128 de sorte à bloquer l'organe de verrouillage 110 dans la deuxième position, celui-ci ne pouvant plus se déplacer selon l'axe de déplacement AD. Lorsque l'actionneur 108 est activé, le soufflet 130 est gonflé, ce qui provoque un pivot de la came 132 contre l'action du ressort précontraint 134 par l'intermédiaire de sa deuxième extrémité 132b, et un désengagement de la première extrémité 132a de la came 132 de la butée 128.

Selon le mode de réalisation de la figure 7, l'organe de verrouillage 110 est sollicité élastiquement vers la première position par un ressort précontraint 125 (montré en transparence à la figure 6) logé dans un bouton 126 accessible par l'utilisateur. Une pression du bouton 126 permet de pousser la tige 111 selon l'axe de déplacement AD vers la deuxième position contre l'effet du ressort précontraint 125. Dans le mode de réalisation des figures, le bouton 126 se trouve sur une partie supérieure du cadre 18 en saillie par rapport au cadre 18. Il se pourrait cependant que le bouton 126 soit au niveau du cadre 18, de sorte que la pression du bouton 126 s'opère par l'enfoncement du bouton 126 partiellement à l'intérieur du cadre 18. Selon d'autres modes de réalisation, le déplacement de l'organe de verrouillage 110 de la première position à la deuxième position pourrait ne pas être manuel. Le déplacement pourrait par exemple être commandé électriquement par une commande manuelle ou électrique de l'utilisateur.

Pour verrouiller le verrou antivol 100, l'utilisateur appuie sur le bouton 126, ce qui compresse le ressort précontraint 125, et bouge la tige 111 selon l'axe de déplacement AD vers la deuxième position. La première extrémité 132a de la came 132 glisse le long de la tige 111 (de par le déplacement de la tige 111) et s'enfonce dans la butée 128 lorsque celle-ci se trouve à niveau de la première extrémité 132a. En effet, l'action du ressort précontraint 134 permet à la première extrémité 132a de rester en contact avec la tige 111 lors de son déplacement.

Pour déverrouiller le verrou antivol 100, l'utilisateur passe sa carte sans contact 124 (ou autre moyen d'identification) à proximité du verrou antivol 100 pour détection par le module de communication 122. L'unité centrale 60 (ou 101) reconnait l'utilisateur et commande l'actionnement de l'actionneur 108. L'actionneur 108 agit sur le système 120 de blocage de l'organe de verrouillage pour débloquer l'organe de verrouillage 110 de la deuxième position. Le soufflet 130 est commandé par l'actionneur 108 qui commence à se remplir et s'agrandir. Du fait de son expansion, la deuxième extrémité 132b de la came 132 qui est connectée au soufflet 130, est mise en mouvement contre l'action du ressort 134. Par pivot, la première extrémité 132a de la came 132 se trouve désengagée de la butée 128, et l'organe de verrouillage 110 se déplace de la deuxième position vers la première position par l'action du ressort précontraint 125.

Selon un mode de réalisation, le verrou antivol 100 comprend de plus un moyen de signalisation (non illustré) émettant un signal (par exemple audio ou visuel) lorsque le l'organe de verrouillage 110 est dans la deuxième position. Il se pourrait aussi que l'action mécanique de l'enfoncement de la première extrémité 132a de la came 132 dans la butée 128 provoque un bruit caractéristique du verrouillage du verrou antivol 100.

Le verrou antivol 100 pourrait de plus inclure un capteur de verrouillage (non illustré), par exemple un potentiomètre permettant de détecter la position de l'organe de verrouillage 110, notamment la position verrouillée.

Le système 10 de mise à disposition du cycle fonctionne comme suit.

Lorsqu'un utilisateur veut emprunter un cycle 12 sur l'une des bornes de verrouillage 30, il peut par exemple faire lire la carte 124 ou un ticket à puce électronique sans contact (NFC ou autre) par le lecteur 41 de la borne interactive ou par un lecteur similaire éventuellement prévu sur un poste de verrouillage 30, ou encore il peut insérer une carte électronique portative dans le lecteur 38 de la borne interactive 32 puis rentrer un ù secret correspondant à cette carte, au moyen du clavier 34, de façon à s'identifier auprès de ladite borne interactive.

Après avoir vérifié les droits de l'utilisateur avec le serveur S1, la borne interactive 32 donne une autorisation de déverrouillage du cycle 12 à l'un des postes de verrouillage 30.

En même temps qu'elle donne cette autorisation de déverrouillage, la borne interactive 32, pourrait selon un mode de réalisation, envoyer à l'unité centrale 60 du cycle 12, un code de déverrouillage propre à l'utilisateur, qui permettrait de déverrouiller le verrou antivol 100. Ce code de déverrouillage peut être le même que le code secret pour déverrouiller le cycle 12 du poste de verrouillage 30. Ainsi, pendant l'utilisation du cycle, seule la correspondance de la carte 124 comportant le code de déverrouillage (ou autre moyens décrit plus haut) avec le verrou antivol 100 de ce cycle 12 auquel ce code a été transmis permettrait de la déverrouiller.

Le code secret et/ou le code de déverrouillage peut être connu d'avance et stocké dans le serveur S1 si l'utilisateur est abonné au service. Ainsi, chaque utilisateur a un code associé qui lui est propre quel que soit le cycle 12 utilisé pendant le temps de son abonnement. En variante, le (ou les) code peut être déterminé au moment où l'utilisateur emprunte le cycle 12 et peut être communiqué à ce moment à l'utilisateur, par exemple par envoi vers le téléphone mobile de l'utilisateur.

La borne interactive 32 envoie le (ou les) code à l'unité centrale 60 du cycle 12 par l'intermédiaire des interfaces de 43a, 43b et / ou par l'intermédiaire des interfaces de communication radio 53, 60a.

Pour récupérer un cycle 12, l'utilisateur peut déverrouiller le cycle 12 qui lui a été attribué, par exemple en appuyant sur un bouton prévu sur le poste de verrouillage correspondant, ce qui provoque la coupure de l'alimentation électrique des contacts 43a par le dispositif d'alimentation 58 et la commande de l'actionneur de déverrouillage 57 par l'unité centrale 56 du poste de verrouillage 30 pour faire passer l'organe de verrouillage 47 en position escamotée. L'utilisateur peut alors prendre le cycle 12, et l'unité centrale électronique 56 du poste de verrouillage 30 repère alors l'enlèvement du cycle 12 puisqu'elle ne peut plus communiquer avec l'unité centrale 56 de ce cycle par les contacts 43a, 43b. L'unité centrale électronique 56 du poste de verrouillage 30 informe alors la borne interactive 32 de cet enlèvement.

Pendant la durée de l'emprunt du cycle 12, l'utilisateur peut vouloir s'arrêter temporairement. Il utilise dans ce cas le système antivol 100 pour sécuriser le cycle 12.

L'organe de verrouillage 110 du cycle 12 est initialement dans la première position. Le verrou antivol 100 est déverrouillé et l'organe de verrouillage 110 ne coopère pas avec l'ouverture 106 de l'organe de blocage 104. La fourche 20 du cycle 12 peut pivoter.

Lorsque l'utilisateur veut verrouiller le cycle 12 en dehors des postes de verrouillages 30, l'utilisateur fait pivoter la fourche 20 du cycle de façon à aligner l'ouverture 106 de l'organe de blocage de la fourche 104 avec l'organe de verrouillage 110, ce qui positionne la fourche 20 à un angle non nul avec la direction longitudinale L du cadre 18. L'utilisateur typiquement tourne le guidon jusqu'à arriver à la fin de course du guidon.

L'utilisateur appuie alors sur le bouton 126 contre l'effet du ressort précontraint 125 de façon à insérer une extrémité libre de l'organe de verrouillage 110 dans l'ouverture 106. Lorsque le bouton 126 est pressé, la deuxième extrémité 132a de la came 132 glisse le long de la tige 111 se déplace en direction de l'ouverture 106 contre l'effort du ressort 125. Lorsque la butée 128 se trouve à hauteur de deuxième extrémité 132a, celle-ci vient s'insérer dans la butée 128 sous l'effort du ressort 134, ce qui vient bloquer la tige 111 dans une position pour laquelle une extrémité se trouve engagée dans l'ouverture 106 de l'organe de blocage de fourche 104. La fourche 20 se trouve alors bloquée en rotation dans une position à un angle non nul A avec la direction longitudinale L.

Lorsque l'utilisateur souhaite réutiliser le cycle 12, l'utilisateur passe sa carte 124 à proximité du verrou antivol 100 (ou autre endroit où se trouverait le module de communication 122). L'unité de contrôle 60 reconnait alors un code de déverrouillage associé à l'utilisateur pour l'utilisation du cycle 12, et commande à l'actionneur 108 de gonfler le soufflet 130. Le soufflet 130 provoque le pivot de la came 132 contre l'effet du ressort 134, et la première extrémité 132a de la came 132 se désengage pour libérer la tige 111, qui repasse alors à la première position. L'extrémité 111b de la tige 111 est désengagée de l'ouverture 106, ce qui libère la fourche 20.

En fin d'utilisation du cycle, lorsque l'utilisateur rend le cycle 12 et le met en place sur un poste de verrouillage 30, il engage le premier organe d'accrochage 42 dans la gâche 46 du poste de verrouillage, de sorte que les contacts électriques 43a, 43b sont connectés ensemble et que les unités centrale 56, 60 peuvent communiquer ensemble.

Lorsque le cycle 12 est verrouillé sur le poste de verrouillage 30, l'unité centrale 56 du poste de verrouillage repère la présence du cycle 12 en communiquant avec l'unité centrale 60 du cycle 12.

L'unité centrale 60 du cycle peut alors communiquer à l'unité centrale 56 du poste de verrouillage, un identifiant unique du cycle 12.

L'unité centrale 56 du poste de verrouillage communique, par les interfaces de communication 54,55, avec l'unité centrale 50 de la borne interactive 32, pour lui signaler la présence du cycle 12 et lui transmettre l'identifiant de ce cycle 12.

L'unité centrale électronique 50 de la borne interactive 32 signale alors la fin de la période d'emprunt du cycle au serveur S1, et l'unité centrale 56 du poste de verrouillage active le dispositif d'alimentation électrique 58 pour recharger la batterie 61 du cycle. Dans le même temps, l'unité centrale 50 de la borne interactive 32 transmet au serveur de gestion S1 l'identifiant unique du cycle 12 qui vient d'être remis en station, ainsi qu'éventuellement le paramètre de charge mesuré lors de la remise du cycle 12 à la station BS.

La borne interactive 32 et / ou le serveur de gestion S1 mémorise alors l'identifiant du cycle 12 remis à la station de stockage de cycles BS et l'instant t0 de remise du cycle 12 à la station BS.

### NOMENCLATURE

système automatique 10
cycle 12
structure 14
roues 16
cadre 18
fourche 20
guidon 22
tube de direction 23
postes de verrouillage 30
poste de commande de station 32
clavier 34
écran 36
lecteur de cartes portatives électroniques 38
dispositif 40 d'impression de tickets
lecteur de carte sans contact 41
premier organe d'accrochage 42
contacts électrique 43a, 43b (INT)
deuxième organe d'accrochage 44
gâche 46
support 48
structure 49 du poste de verrouillage
organe de verrouillage 47
unité centrale électronique 50 (UC)
interfaces de communication radio 51, 52, 53 (COM)
interface de communication 54 (COM)
interface de communication 55 (COM)
unité centrale électronique 56 (UC)
actionneur de déverrouillage 57 (LCK)
dispositif d'alimentation électrique 58 (AL)
dispositif d'alimentation électrique 59 (AL)
unité centrale électronique 60 (UC)
interface de communication radio 60a (COM)
batterie 61 (BATT)
moteur électrique 62 (M)
dispositif électrique de verrouillage 65 (LCK CH) chaîne 66
zone de dépose de cycles 69
marquage au sol 69a
dispositif de sécurisation 70
dispositif d'éclairage 71 (ECL)
caméra 72 (CAM)
interface de communication 73 (COM)
poteau 74
verrou antivol blocage de fourche 100
unité centrale 101
système antivol 102
couronne 103
organe de blocage de fourche 104
ouverture 106
actionneur 108
organe de verrouillage 110
tige 111
première extrémité 111a
deuxième extrémité 111b
système 120 de blocage de l'organe de verrouillage module de communication 122 (COM)
carte sans contact 124
ressort précontraint 125
bouton 126
butée 128
soufflet 130
came 132
première extrémité 132a
deuxième extrémité 132b
ressort précontraint 134
stations BS
axe de déplacement AD
angle A
angle B
direction longitudinale L
serveur central S1
serveur S2

## Revendications

1. Cycle (12) comportant un cadre (18) porté par une roue (16) arrière, une fourche (20) montée pivotante sur le cadre (18) et solidaire d'un guidon (22), une roue (16) avant portant la fourche (20), et un verrou antivol (100) comprenant :
- un organe de blocage de fourche (104) fixé à la fourche (20) du cycle (12), l'organe de blocage de fourche (104) comprenant une ouverture (106); et
- un système antivol (102) monté au cadre (18) du cycle (12) et coopérant avec l' organe de blocage de fourche (104), le système antivol (102) ayant un organe de verrouillage (110) mobile entre une première position où l'organe de verrouillage (110) est distant de l'ouverture (106) de l'organe de blocage de fourche (104) et le verrou antivol (100) est en position déverrouillé, et une deuxième position où l'organe de verrouillage (110) coopère avec l'ouverture (106) de l'organe de blocage de fourche (104) et le verrou antivol (100) est en position verrouillé,
- le verrou antivol (100) étant en position verrouillé lorsque l'ouverture (106) de l'organe de blocage de fourche (104) est disposée pour être en correspondance avec l'organe de verrouillage (110) coopérant avec l'ouverture (106) de l'organe de blocage de fourche (104), la correspondance étant assurée lorsque la fourche (20) est dans une position tournée où la roue avant (16) forme un angle non nul vis à vis d'une direction longitudinale (L) du cadre (18), lorsque le verrou antivol (100) est en position verrouillé la fourche (20) est bloquée dans la position tournée de la roue avant (16),
- l'organe de verrouillage (110) est sollicité élastiquement vers la première position, le système antivol (102) inclut un système (120) de blocage de l'organe de verrouillage dans la deuxième position, et le système antivol (102) comporte un actionneur (108) agissant sur le système (120) de blocage de l'organe de verrouillage pour débloquer l'organe de verrouillage (110) de la deuxième position, et **caractérisé par**
- un moyen de communication (122) connecté à l'actionneur (108) permet de commander l'actionneur (108) à distance, dans lequel l'organe de verrouillage (110) est une tige (111) ayant une forme et une taille en section de coupe adaptée à être insérée dans l'ouverture (106) de l'organe de fourche (104) pour verrouiller le verrou antivol (100), et la tige (111) ayant une butée (128), et le système (120) de blocage de l'organe de verrouillage inclut : un soufflet (130) commandé par l'actionneur (108), et une came (132) pivotant élastiquement, la came (132) ayant une première extrémité (132a) abutant sur la tige (111) et une deuxième extrémité (132b) connectée au soufflet (130), lorsque l'organe de verrouillage (110) est dans la deuxième position la première extrémité (132a) de la came (132) est engagée dans la butée (128) de sorte à bloquer l'organe de verrouillage (110) dans la deuxième position.

2. Cycle selon la revendication 1, dans lequel l'actionneur (108) est électrique.

3. Cycle selon l'une quelconque des revendications précédentes, dans lequel le système antivol (102) comprend un bouton (126) connecté à l'organe de verrouillage (110) par un ressort précontraint vers la première position de l'organe de verrouillage (110), une pression du bouton (126) forçant l'organe de verrouillage (110) vers la deuxième position contre l'action du ressort précontraint.

4. Cycle selon l'une quelconque des revendications précédentes, dans lequel le système (120) de blocage de l'organe de verrouillage est au moins partiellement intégré à l'intérieur du cadre (18).

5. Cycle selon l'une quelconque des revendications précédentes, dans lequel l'organe de verrouillage (110) est disposé partiellement à l'intérieur du cadre (18) et partiellement à l'extérieur du cadre (18) en direction de la fourche (20).

6. Système automatique de mise à disposition de cycles comprenant :
- une pluralité de cycles (12) suivant l'une des revendications 1 à 5;
- une infrastructure (30, 32, S1) adaptée pour mettre à disposition les cycles (12) à des utilisateurs, l'infrastructure étant adaptée pour, lorsqu'elle délivre un cycle (12) à un utilisateur, communiquer un code propre à l'utilisateur au verrou antivol (100) du cycle (12) .

## Patentansprüche

1. Fahrrad (12), aufweisend einen von einem Hinterrad (16) getragenen Rahmen (18), eine drehbar an dem Rahmen (18) angebrachte und mit einer Lenkstange (22) verbundene Radgabel (20), ein die Radgabel (20) tragendes Vorderrad (16) und ein Diebstahlschutzschloss (100), das aufweist:
- ein Radgabelblockierungselement (104), das an der Radgabel (20) des Fahrrads (12) befestigt ist, wobei das Radgabelblockierungselement (104) eine Öffnung (106) aufweist; und
- ein Diebstahlschutzsystem (102), das an dem Rahmen (18) des Fahrrads (12) angebracht ist und mit dem Radgabelblockierungselement (104) zusammenwirkt, wobei das Diebstahlschutzsystem (102) ein Verriegelungselement (110) hat, das bewegbar ist zwischen einer ersten Position, in der das Verriegelungselement (110) im Abstand von der Öffnung (106) des Radgabelblockierungselements (104) angeordnet ist und das Diebstahlschutzschloss (100) in der entriegelten Position ist, und einer zweiten Position, in der das Verriegelungselement (110) mit der Öffnung (106) des Radgabelblockierungselements (104) zusammenwirkt und das Diebstahlschutzschloss (100) in der verriegelten Position ist,
- wobei das Diebstahlschutzschloss (100) in der verriegelten Position ist, wenn die Öffnung (106) des Radgabelblockierungselements (104) angeordnet ist, um in Entsprechung mit dem Verriegelungselement (110), das mit der Öffnung (106) des Radgabelblockierungselements (104) zusammenwirkt, zu sein, wobei die Entsprechung sichergestellt ist, wenn die Radgabel (20) in einer gedrehten Position ist, in der das Vorderrad (16) einen Winkel von ungleich Null bezüglich einer Längsrichtung (L) des Rahmens (18) bildet, wobei, wenn das Diebstahlschutzschloss (100) in der verriegelten Position ist, die Radgabel (20) in der gedrehten Position des Vorderrads (16) blockiert ist,
- das Verriegelungselement (110) elastisch zur ersten Position hin vorgespannt ist, das Diebstahlschutzsystem (102) ein Verriegelungselement-Blockierungssystem (120) zum Blockieren des Verriegelungselements in der zweiten Position aufweist, und das Diebstahlschutzsystem (102) einen Aktuator (108) aufweist, der auf das Verriegelungselement-Blockierungssystem (120) wirkt, um das Verriegelungselement (110) aus der zweiten Position freizugeben, und **dadurch gekennzeichnet, dass**
- eine mit dem Aktuator (108) verbundene Kommunikationseinrichtung (122) eine Fernsteuerung des Aktuators (108) erlaubt, wobei das Verriegelungselement (110) ein Stift (111) ist, dessen Querschnittform und -größe angepasst ist, in die Öffnung (106) des Radgabelblockierungselements (104) eingeführt zu werden, um das Diebstahlschutzschloss (100) zu verriegeln, und wobei der Stift (111) einen Anschlag (128) hat, und das Verriegelungselement-Blockierungssystem (120) aufweist: einen von dem Aktuator (108) gesteuerten Balg (130) und einen elastisch rotierenden Nocken (132), wobei der Nocken (132) ein an den Stift (111) anschlagendes erstes Ende (132a) und ein mit dem Balg (130) verbundenes zweites Ende (132b) hat, wobei, wenn das Verriegelungselement (110) in der zweiten Position ist, das erste Ende (132a) des Nockens (132) im Eingriff mit dem Anschlag (128) ist, derart, um das Verriegelungselement (110) in der zweiten Position zu blockieren.

2. Fahrrad nach Anspruch 1, in welchem der Aktuator (108) elektrisch ist.

3. Fahrrad nach einem der vorstehenden Ansprüche, in welchem das Diebstahlschutzsystem (102) einen Knopf (126) aufweist, der über eine Feder, die hin zur ersten Position des Verriegelungselements (110) vorgespannt ist, mit dem Verriegelungselement (110) verbunden ist, wobei ein Drücken des Knopfs (126) das Verriegelungselement (110) gegen die Wirkung der vorgespannten Feder hin zur zweiten Position zwingt.

4. Fahrrad nach einem der vorstehenden Ansprüche, in welchem das Verriegelungselement-Blockierungssystem (120) mindestens teilweise in den Rahmen (18) integriert ist.

5. Fahrrad nach einem der vorstehenden Ansprüche, in welchem das Verriegelungselement (110) teilweise innerhalb des Rahmens (18) und teilweise außerhalb des Rahmens (18) in Richtung Radgabel (20) angeordnet ist.

6. Automatisches System zur Bereitstellung von Fahrrädern, aufweisend:
- mehrere Fahrräder (12) nach einem der Ansprüche 1 bis 5;
- eine Infrastruktur (30, 32, S1), die angepasst ist, Benutzern die Fahrräder (12) bereitzustellen, wobei die Infrastruktur angepasst ist, um, wenn sie einem Benutzer ein Fahrrad (12) ausgibt, einen dem Benutzer zugehörigen Code zu dem Diebstahlschutzschloss (100) des Fahrrads (12) zu kommunizieren.

## Claims

1. Cycle (12) comprising a frame (18) carried by a rear wheel (16), a fork (20) mounted so as to pivot on the frame (18) and integral with a handlebar (22), a front wheel (16) carrying the fork (20), and an anti-theft lock (100) comprising:
- a fork-locking member (104) fixed to the fork (20) of the cycle (12), the fork-locking member (104) comprising an opening (106); and
- an anti-theft system (102) mounted on the frame (18) of the cycle (12) and cooperating with the fork-locking member (104), the anti-theft system (102) having a locking member (110) that is movable between a first position where the locking member (110) is distanced from the opening (106) of the fork-locking member (104) and the anti-theft lock (100) is in an unlocked position, and a second position where the locking member (110) engages with the opening (106) of the fork-locking member (104) and the anti-theft lock (100) is in a locked position,
- the anti-theft lock (100) being in a locked position when the opening (106) of the fork-locking member (104) is arranged to be in correspondence with the locking member (110) engaging with the opening (106) of the fork-locking member (104), the correspondence being ensured when the fork (20) is in a rotated position where the front wheel (16) forms a non-zero angle with a longitudinal direction (L) of the frame (18), when the anti-theft lock (100) is in a locked position the fork (20) is locked in the rotated position of the front wheel (16),
- the locking member (110) is resiliently biased towards the first position, the anti-theft system (102) includes a system (120) for locking the locking member in the second position, and the anti-theft system (102) comprises an actuator (108) acting on the system (120) for locking the locking member in order to unlock the locking member (110) from the second position, and **characterized by**
- a communication means (122) connected to the actuator (108) makes it possible to control the actuator (108) remotely, wherein the locking member (110) is a rod (111) having a cross-section of a shape and size suitable for insertion into the opening (106) of the fork member (104) in order to lock the anti-theft lock (100), and the rod (111) having an abutment (128), and the system (120) for locking the locking member includes: a bellows (130) controlled by the actuator (108), and a resiliently pivoting cam (132), the cam (132) having a first end (132a) abutting against the rod (111) and a second end (132b) connected to the bellows (130), when the locking member (110) is in the second position the first end (132a) of the cam (132) is engaged in the abutment (128) so as to lock the locking member (110) in the second position.

2. Cycle according to claim 1, wherein the actuator (108) is electric.

3. Cycle according to any one of the preceding claims, wherein the anti-theft system (102) comprises a button (126) connected to the locking member (110) by a spring prestressed towards the first position of the locking member (110), pressure on the button (126) forcing the locking member (110) towards the second position against the action of the prestressed spring.

4. Cycle according to any one of the preceding claims, wherein the system (120) for locking the locking member is at least partially integrated inside the frame (18).

5. Cycle according to any one of the preceding claims, wherein the locking member (110) is arranged partially inside the frame (18) and partially outside the frame (18) in the direction of the fork (20).

6. Automatic system for providing cycles, comprising:
- a plurality of cycles (12) according to one of claims 1 to 5;
- an infrastructure (30, 32, S1) adapted to provide the cycles (12) to users, the infrastructure being adapted to, when it delivers a cycle (12) to a user, communicate a code, specific to the user, to the anti-theft lock (100) of the cycle (12).
